# EUROPÄISCHE PATENTSCHRIFT

(11) **EP 0 586 971 B1**
(45) Veröffentlichungstag und Bekanntmachung des Hinweises auf die Patenterteilung: **08.01.1997**
(21) Anmeldenummer: 93113622.0
(22) Anmeldetag: 26.08.1993
(51) Int. Cl.: B60J 3/02

(54) **Sonnenblende für Fahrzeuge**
Sun visor for vehicles
Pare-soleil pour véhicules

(30) Priorität: 09.09.1992 DE 4230109
(43) Veröffentlichungstag der Anmeldung: 16.03.1994
(73) Patentinhaber: BECKER GROUP EUROPE GmbH, 42285 Wuppertal (DE)
(72) Erfinder: Viertel, Lothar, D-66802 Altforweiler (DE); Lecorvaisier, Rene, F-57570 Hombourg-Haut (FR); Sauder, Patrick, F-57730 Folschviller (FR); Buchheit, Christian, F-57880 Ham sus Vasberg (FR)

(56) Entgegenhaltungen:
- DE-A- 2 541 546
- DE-C- 4 023 243
- FR-A- 2 327 880
- FR-A- 2 643 028

## Beschreibung

Die Erfindung bezieht sich auf eine Sonnenblende für Fahrzeuge mit einem Sonnenblendenkörper, der aus Polypropylen - Partikelschaumstoff besteht und auf einer Breitseite eine Vertiefung aufweist, in die ein von einem Rahmen gehaltener Spiegel eingesetzt ist.

Es ist allgemein bekannt, an den Sonnenblendenkörpern von Sonnenblenden Spiegel anzuordnen. Zur Befestigung eines Spiegels am Sonnenblendenkörper werden verschiedene Systeme eingesetzt. So werden die Spiegelrahmen häufig mit einer den Sonnenblendenkörper umgebenden Umhüllung verschweißt, was die Materialauswahl einschränkt und eine Demontierbarkeit ausschließt. Auch bei herkömmlichen Klebeverbindungen ergeben sich die vorstehend aufgezeigten Nachteile. Bei anderen herkömmlichen Befestigungssystemen weist der Sonnenblendenkörper örtlich engeschäumte Einlagen mit Anbildungen zum Verkrallen, Verschrauben oder Verklipsen von am Spiegelrahmen angeordneten Halterungselementen auf. Der Nachteil hierbei ist in der aufwendigen Fertigung und der oftmals schwierigen Demontierbarkeit zu sehen.

Der Erfindung liegt hiernach die Aufgabe zugrunde, eine Sonnenblende der eingangs genannten Art so zu gestalten, daß auf Schweiß- oder Klebeverbindungen ebenso verzichtet werden kann wie auf zusätzliche Einlageelemente im Sonnenblendenkörper. Dabei wird weiterhin eine rationelle und damit kostengünstigere Fertigung angestrebt sowie Wert auf eine zerstörungsfreie Demontierbarkeit zur Vereinfachung des Recyclings gelegt.

Zur Lösung dieser Aufgabe ist erfindungsgemäß vorgesehen, daß ein Randbereich der Vertiefung über deren Umfang verteilt Öffnungen im Sonnenblendenkörper, der aus Polypropylen-Partikelschaumstoff besteht, vorgesehen sind, welche zur Aufnahme von Verankerungszapfen, die am Rahmen angeordnet sind, dienen, daß der Rahmen mit den Verankerungszapfen als einstückiges Kunststoff-Spritzgußteil ausgebildet ist und daß jeder Verankerungszapfen mehrere ringartige Erhebungen, die jeweils einen sich im Schaumstoff verankernden Hinterschnitt bilden, aufweist.

Es hat sich in überraschender Weise gezeigt, daß die erfindungsgemäße Spiegelbefestigung den von der Abnehmerschaft geforderten Freigabekriterien, wie Schlagprüfung u.dgl., in optimaler Weise standhalten konnte. Diese Erkenntnis war keineswegs selbstverständlich, sondern sehr überraschend, weil frühere Versuche mit klassischen Schaumstoffmaterialien, wie PU u.dgl. nie den angestrebten Erfolg erbrachten, sondern schon bei der Schlagprüfung durchfielen. Die Erkenntnis, daß sich Polypropylen-Partikelschaum völlig anders verhält als die bisher für die Sonnenblendenkörper eingesetzten Schaumstoffe, ist ein wesentlicher Verdienst der vorliegenden Erfindung.

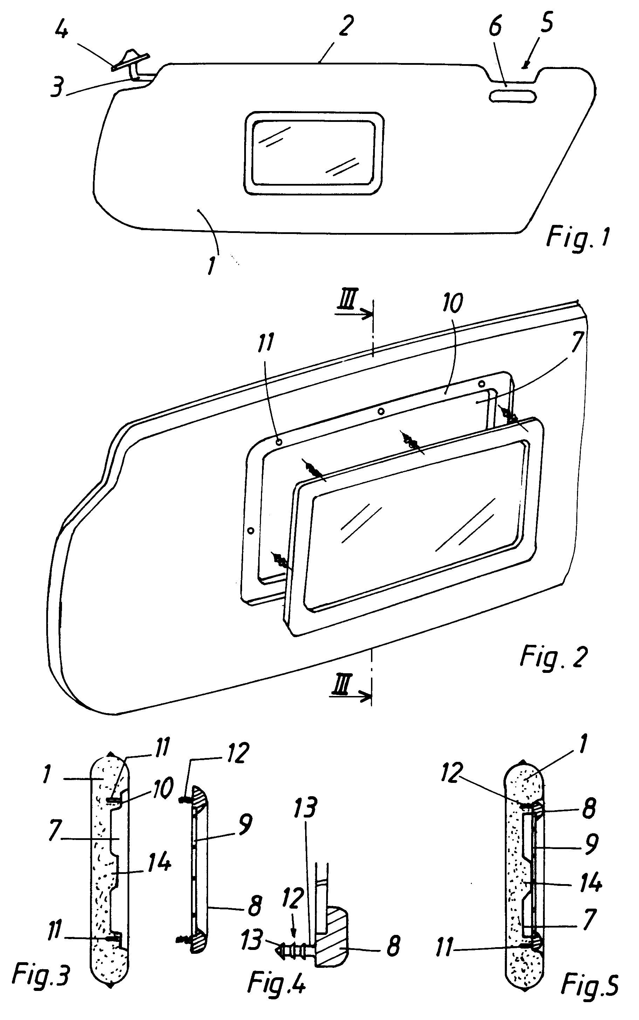

Ein Ausführungsbeispiel der Erfindung wird nachfolgend anhand der Zeichnung näher erläutert. Es zeigen
- Fig. 1: eine Sonnenblende in ihrer Gebrauchsstellung,
- Fig. 2: den Sonnenblendenkörper nach Fig. 1 in perspektivischer Explosivdarstellung,
- Fig. 3: einen Schnitt III - III nach Fig. 2,
- Fig. 4: eine vergrößerte Darstellung des Bereichs X in Fig. 3 und
- Fig. 5: einen Schnitt III - III nach Fig. 2 im zusammengefügten Zustand der Teile.

Die Sonnenblende umfaßt einen Sonnenblendenkörper 1, in derem oberen Längskantenbereich 2 zeichnungslinksseitig eine Sonnenblendenachse 3 eingelagert ist. Die Sonnenblendenachse 3 ist anderendig in einem an der Fahrzeugkarosserie befestigbaren Lagerböckchen 4 gelagert. Zeichnungsrechtsseitig weist der Sonnenblendenkörper 1 einen, eine Ausnehmung 5 querenden Gegenlagerzapfen 6 auf, der lösbar in ein nicht gezeigtes Gegenlagerböckchen einrastbar ist.

Der Sonnenblendenkörper 1 ist aus Polypropylen-Partikelschaum gebildet und weist auf einer Breitseite eine Vertiefung 7 auf, in die ein von einem Rahmen 8 getragener Spiegel 9 eingesetzt ist. Vom umlaufenden Randbereich 1o der Vertiefung 7 gehen über den Umfang verteilt Öffnungen 11 aus, und zwar senkrecht zur Hauptebene des Sonnenblendenkörpers 1. Die Öffnungen 11 werden bevorzugt bei der Herstellung des Sonnenblendenkörpers 1 gebildet.

Der Rahmen 8 besteht aus einem Kunststoff-Spritzgußteil aus recyclebarem Kunststoffmaterial und trägt einstückig und materialeinheitlich angeformte Verankerungszapfen 12, entsprechend dem Lochbild der Öffnungen 11. Die Verankerungszapfen 12 weisen mehrere ringartig angeformte Erhebungen 13 auf, die entgegen der Steckrichtung Hinterschneidungen bilden. Der Durchmesser der Verankerungszapfen 12 sollte im Bereich der Erhebungen 13 größer als der Durchmesser der Öffnungen sein.

Bei der Herstellung eines Sonnenblendenkörpers 1 wird ein nicht gezeigtes Formwerkzeug mit einem Formhohlraum eingesetzt, welcher zwecks Bildung der Vertiefung 7 und der Öffnungen 11 eingeengt ist. In den Formhohlraum wird eine Füllung aus Schaumstoffpartikeln eingebracht und das Formwerkzeug mit Hilfe von Dampf erhitzt, so daß die Schaumstoffpartikel erweichen, sich ausdehnen und miteinander verschweißen. Nach dem anschließenden Abkühlen kann der Sonnenblendenkörper 1 aus dem Formwerkzeug herausgenommen werden.

Der Sonnenblendenkörper 1 wird vor dem Einsetzen des Spiegels gegebenenfalls mit einer Hüllfolie, die auch aus Polypropylen bestehen kann, versehen. Dann erfolgt das Einsetzen der aus Spiegel 9 und Rahmen 8 bestehenden Einheit, indem lediglich die Verankerungszapfen 12 in die passenden Öffnungen 11, die praktisch aus Sacklöchern bestehen, eingepreßt werden. Wie die Zeichnung noch zeigt, ist der Spiegel 9 am Umfang und sonst nur punktuell durch örtliche Erhebungen 14 in der Vertiefung 7 abgestützt.

## Patentansprüche

1. Sonnenblende für Fahrzeuge mit einem Sonnenblendenkörper (1), der aus Polypropylen-Partikelschaumstoff besteht und auf einer Breitseite eine Vertiefung (7) aufweist, in die ein von einem Rahmen (8) gehaltener Spiegel (9) eingesetzt ist, wobei im Randbereich (1o) der Vertiefung (7) über deren Umfang verteilt Öffnungen (11) im Sonnenblendenkörper (1) vorgesehen sind, welche zur Aufnahme von Verankerungszapfen (12), die am Rahmen (8) angeordnet sind, dienen, wobei der Rahmen (8) mit den Verankerungszapfen (12) als einstückiges Kunststoff-Spritzgußteil ausgebildet ist und wobei jeder Verankerungszapfen (12) mehrere ringartige Erhebungen (13), die jeweils einen sich im Schaumstoff verankernden Hinterschnitt bilden, aufweist.

## Claims

1. Sun visor for vehicles, having a sun-visor body (1) which consists of polypropylene particle foam and, on a broad side, has a depression (7) into which there is introduced a mirror (9) retained by a frame (8), the sun-visor body (1) being provided with openings (11) which are distributed, in the border region (10) of the depression (7), over the periphery of the latter and are intended for receiving anchorage pins (12) which are arranged on the frame (8), the frame (8) with the anchorage pins (12) being designed as a single-piece plastic injection moulding, and each anchorage pin (12) having a plurality of annular elevations (13) which each form an undercut which anchors in the foam.

## Revendications

1. Pare-soleil pour véhicule comportant un corps (1) qui est fait d'une mousse de particules de polypropylène et qui présente, sur un côté de la largeur, in creux (7), dans lequel est inséré un miroir (9) maintenu par un cadre (8), les ouvertures (11), réparties sur le pourtour du creux (7), dans la région de bordure (10) de celui-ci, étant prévues dans le corps (1) du pare-soleil, lesquelles ouvertures servent à recevoir des tenons d'ancrage (12), qui sont placés sur le cadre (8), le cadre (8) étant réalisé avec les tenons d'ancrage (12) sous la forme d'une pièce en matière plastique moulée par injection d'un seul tenant et chaque tenon d'ancrage (12) présentant plusieurs reliefs (13) du type en anneau, qui forment chacun un détalonnage s'ancrant dans la mousse.
